# EUROPEAN PATENT APPLICATION

(11) **EP 3 598 788 A1**
(43) Date of publication of application: **22.01.2020**
(21) Application number: 17900925.3
(22) Date of filing: 16.03.2017
(51) Int. Cl.: H04W 16/28, H04W 88/02

(54) **USER EQUIPMENT AND WIRELESS COMMUNICATION METHOD**

(71) Applicant: NTT DOCOMO, INC., Chiyoda-ku Tokyo 100-6150 (JP)
(72) Inventor: OSAWA, Ryosuke, Tokyo 100-6150 (JP)
(74) Representative: Hoffmann Eitle
(86) International application number: PCT/JP2017/010797
(87) International publication number: WO 2018/167935

(57) **Abstract**

According to one aspect of the present invention, a user terminal has a transmitting/receiving section for transmitting and/or receiving signals by using a certain beam, and a control section that exerts control for switching between a first beam selection process for selecting the certain beam by using information about a reported beam and a second beam selection process for selecting the certain beam autonomously, based on information about a certain switching condition. According to the present invention, even when multiple beam selection methods are used, it is still possible to prevent the situation where unexpected beam selection methods are used.

## Description

### Technical Field

The present invention relates to a user terminal and a radio communication method in next-generation mobile communication systems.

### Background Art

In the UMTS (Universal Mobile Telecommunications System) network, the specifications of long term evolution (LTE) have been drafted for the purpose of further increasing high speed data rates, providing lower latency and so on (see non-patent literature 1). Also, the specifications of LTE-A (also referred to as "LTE-advanced," "LTE Rel. 10," "LTE Rel. 11," or "LTE Rel. 12") have been drafted to provide wide bands and increased speed beyond LTE (also referred to as "LTE Rel. 8" or "LTE Rel. 9"), and successor systems of LTE (also referred to as, for example, "FRA (Future Radio Access)," "5G (5th generation mobile communication system)," "NR (New Radio)," "NX (New radio access)," "FX (Future generation radio access)," "LTE Rel. 13," "LTE Rel. 14," "LTE Rel. 15" or later versions) are under study.

In existing LTE systems (for example, LTE Rel. 8 to 13), downlink (DL) and/or uplink (UL) communication are performed using 1-ms subframes (also referred to as "transmission time intervals (TTIs)" and so on). These subframes are the time unit for transmitting 1 channel-encoded data packet, and serve as the unit of processing in, for example, scheduling, link adaptation, retransmission control (HARQ (Hybrid Automatic Repeat reQuest)) and so on.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall Description; Stage 2 (Release 8)," April, 2010

### Summary of Invention

### Technical Problem

Future radio communication systems (for example, 5G, NR, etc.) are expected to realize various radio communication services so as to fulfill mutually varying requirements (for example, ultra high speed, large capacity, ultra-low latency, etc.).

For example, NR is under study to provide radio communication services referred to as "eMBB (enhanced Mobile Broad Band)," "mMTC (massive Machine Type Communication)," "URLLC (Ultra Reliable and Low Latency Communications)," and so on.

Envisaging NR, studies are in progress to use beamforming (BF) for both transmission and receipt, primarily for the purpose of making it less difficult to secure coverage even when the carrier frequency increases, and reducing the propagation loss of radio waves.

As for the method of selecting beams, 2 types of operations may be possible -- that is, either UE makes self-directed selections, or a base station makes selections and sends commands to the UE. However, making it possible to freely switch between these 2 beam selection methods might lead to the situation where one switches the beam in a way that is unpredictable to the other one. In this case, the quality of communication, the throughput of communication and so forth might deteriorate unexpectedly.

So, the present inventors have come up with the idea of providing restriction of switching the beam selection method. According to one aspect of the present invention, it is possible to, for example, prevent UE, effectively, from switching beams against the intention of gNB.

The present invention has been made in view of the above, and it is therefore an object of the present invention to provide a user terminal and a radio communication method, whereby, even when multiple beam selection methods are used, it is still possible to prevent the situation where unexpected beam selection methods are used.

### Solution to Problem

According to one aspect of the present invention, a user terminal has a transmitting/receiving section that transmits and/or receives a signal by using a certain beam, and a control section that controls a first beam selection process for selecting the certain beam by using information about a reported beam and a second beam selection process for selecting the certain beam autonomously, to be switched based on information about a certain switching condition.

### Advantageous Effects of Invention

According to the present invention, even when multiple beam selection methods are used, it is still possible to prevent the situation where unexpected beam selection methods are used.

### Brief Description of Drawings

FIGs. 1A and 1B are diagrams to show examples of beam pairs;
FIG. 2 is a diagram to show an example of switching from gNB centricity to UE centricity;
FIG. 3 is a diagram to show an example of switching from UE centricity to gNB centricity;
FIG. 4 is a diagram to show an example of the flow of switching of centricity according to one embodiment of the present invention;
FIG. 5 is a diagram to show an exemplary schematic structure of a radio communication system according to one embodiment of the present invention;
FIG. 6 is a diagram to show an exemplary overall structure of a radio base station according to one embodiment of the present invention;
FIG. 7 is a diagram to show an exemplary functional structure of a radio base station according to one embodiment of the present invention;
FIG. 8 is a diagram to show an exemplary overall structure of a user terminal according to one embodiment of the present invention;
FIG. 9 is a diagram to show an exemplary functional structure of a user terminal according to one embodiment of the present invention; and
FIG. 10 is a diagram to show an exemplary hardware structure of a radio base station and a user terminal according to one embodiment of the present invention.

### Description of Embodiments

Envisaging future radio communication systems (for example, NR), studies are in progress to use beamforming (BF) for both transmission and receipt primarily for the purpose of making it less difficult to secure coverage even when the carrier frequency increases, and reducing the propagation loss of radio waves. Assuming that a very large number of antenna elements are used, BF refers to the technique of forming beams (antenna directivities) by, for example, adjusting the amplitude and/or the phase of signals transmitted/received in each element (also referred to as "precoding"). Note that such MIMO (Multiple Input Multiple Output) to use a very large number of antenna elements is also referred to as "massive MIMO."

BF can be classified into digital BF and analog BF. Digital BF refers to a method of performing precoding signal processing on the baseband (for digital signals). In this case, the inverse fast Fourier transform (IFFT)/digital-to-analog conversion (DAC)/RF (Radio Frequency) are carried out in parallel processes, as many as the number of antenna ports (or RF chains). Meanwhile, it is possible to form a number of beams to match the number of RF chains at any arbitrary timing.

Analog BF refers to a method of using phase shifting devices on RF. Analog BF only rotates the phase of RF signals and therefore can be realized based on simple and inexpensive configurations, although it cannot form a number of beams at the same time.

Note that it is also possible to implement a hybrid BF configuration that combines digital BF and analog BF. While studies are on-going to introduce massive MIMO in NR, attempting to form an enormous number of beams by using digital BF alone might result in expensive circuit structures. For this reason, it is more likely that a hybrid BF configuration will be used in NR.

Envisaging NR, studies are underway to allow both a base station (which may be referred to as a "BS," "transmission/reception point (TRP)," an "eNB (eNode B)," a "gNB" and so forth) and UE to form transmitting/receiving beams and achieve gains.

Transmitting beams and/or receiving beams may be selected based on, for example, propagation path information that is estimated using reference signals. The reference signals may include, for example, cell-specific reference signals (CRSs), channel state information-reference signals (CSI-RSs), measurement reference signals (such as sounding reference signals (SRSs)) and so on, or reference signals that are defined apart from these (for example, beam-specific reference signals (BRSs), which are beam-specific (which vary per beam)) may be used.

The propagation path information is, for example, channel state information (CSI), information related to channel characteristics and/or channel matrix. Note that the propagation path information may include the transmitter/receiver characteristics of the UE and the gNB, phase and/or amplitude adjustment results for beam forming, and so on. Here, the transmitter/receiver characteristics refer to, for example, the frequency characteristics (for example, phase and/or amplitude characteristics) of the transmitter/receiver.

Note that the propagation path information may be at least one of a channel quality indicator (CQI), a precoding matrix indicator (PMI), a precoding type indicator (PTI), a rank indicator (RI) and/or the like. Note that a PMI, which is determined by gNB, may be referred to as a "TPMI (Transmitted PMI)."

The gNB may receive uplink reference signals transmitted from the UE, perform channel estimation and so on based on the uplink reference signals, and derive uplink and/or downlink propagation path information. The UE may receive downlink reference signals transmitted from the gNB, perform channel estimation and so on based on the downlink reference signals, and derive uplink and/or downlink propagation path information.

It is preferable if the gNB and the UE can specify which beam the communicating party is using. For example, the gNB and the UE may share information as to in what combinations transmitting/receiving beams are paired (combinations of transmitting beams used on the transmitting side and receiving beams used on the receiving side). In this case, the gNB may report (indicate) beam pairs to the UE, and the UE may use the transmitting beams corresponding to the reported beam pairs in transmission (and/or use the receiving beam for receipt). The combinations of paired transmitting/receiving beams may be referred to as "beam pair links (BPLs)."

Information about the combinations of paired transmitting/receiving beams may be reported to the UE and/or the gNB by using higher layer signaling (for example, RRC signaling, medium access control (MAC) signaling (for example, MAC control element (CE)), broadcast information, etc.), physical layer signaling (for example, downlink control information (DCI), uplink control information (UCI), etc.), and so on, or by combining these.

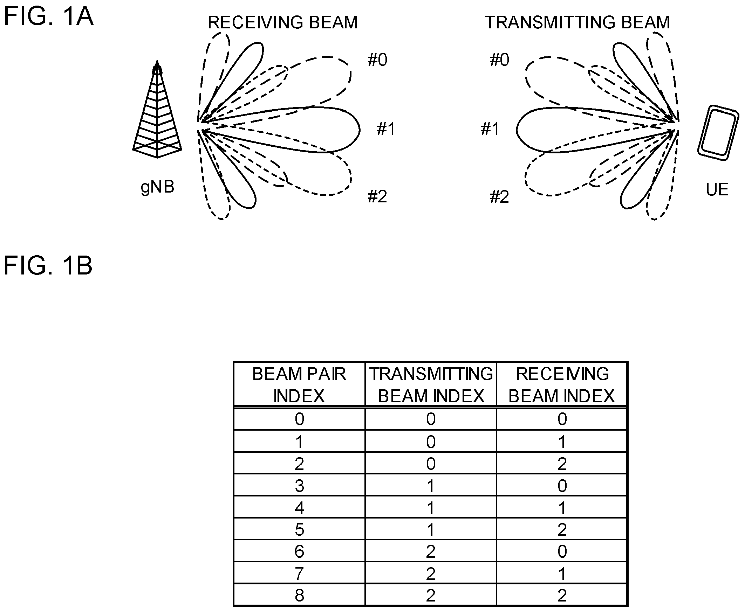

FIGs. 1A and 1B are diagrams to show examples of beam pairs. FIG. 1A shows an example of a UE's transmitting beam and a gNB's receiving beams, and FIG. 1B shows examples of beam pair indices (BPIs), which represent the pairs of transmitting/receiving beams of FIG. 1A. FIG. 1A shows 3 transmitting beams #0 to #2 available to the UE (corresponding to transmitting beam (Tx beam) indices #0 to #2), and 3 receiving beams #0 to #2 available to the gNB (corresponding to receiving beam (Rx beam) indices #0 to #2).

In FIG. 1B, the UE transmitting beam indices and the gNB receiving beam indices shown in FIG. 1A are paired, and associated with BPIs #0 to #8, respectively. Note that it may not be possible to identify all the transmitting/receiving beam pairs that are available, based on BPIs.

The UE and/or the gNB may hold channel information that corresponds to each BPI, as shown in FIG. 1B, and the UE and/or the gNB may decide which transmitting beam and/or receiving beam to use, based on the channel information corresponding to each BPI. For example, channel information corresponding to each BPI may be obtained based on beam sweeping by the UE and the gNB. In beam sweeping, multiple beams (for example, multiple beams of varying directivities) are switched and transmitted in different time fields and/or different frequency fields.

The signals and/or channels to be swept and transmitted may be any signals, and may be, for example, at least one of a reference signal, a synchronization signal, a random access preamble, a control signal, a data signal and so on, or may be a combination of these. Also, the signals and/or the channels to be transmitted in each beam may be the same, or different signals and/or channels may be transmitted in every beam.

Note that, in this specification, beams are distinguished (that is, differences between multiple beams are judged) based on, but not limited to, at least one of following (1) to (8):
(1) resources (for example, the time and/or frequency resources, the number of resources, etc.);
(2) antenna ports (for example, the port indices of DMRSs (DeModulation Reference Signals) and/or measurement reference signals (SRSs (Sounding Reference Signals), the number of ports, the resources corresponding to ports, etc.);
(3) precoding (for example, whether or not precoding is used, precoding weights, etc.);
(4) transmission power;
(5) phase rotation;
(6) beam widths;
(7) beam angle (for example, the tilt angle); and
(8) the number of layers.

Also, the term "beam" as used herein may be used interchangeably with at least one of (1) to (8) listed above, and, for example, a "beam" may be interpreted as meaning a "resource," an "antenna port," a "DMRS port," an "SRS port," a "reference signal antenna port" and so on. Also, a "beam" may be interpreted as meaning "transmitting beam and/or receiving beam."

A DMRS port refers to an antenna port corresponding to a demodulation reference signal (DMRS) for a DL signal (for example, a DL data channel and/or a DL control channel), and may correspond to a beam on a one-by-one basis. Note that, when DMRS ports are different, at least one of the DMRS sequence, the frequency resource, the time resource or the code resource where the DMRS is allocated (for example, an orthogonal code (OCC (Orthogonal Cover Code)), and/or the cyclic shift (CS)) may be different between these DMRS ports.

An SRS port may be, for example, a port for an SRS that is used for UL channel measurements, and may correspond to a beam on a one-by-one basis. The UE may be configured to use a different transmitting beam for every reference signal (for example, DMRS, SRS, etc.) resource, and may use the same transmitting beam at multiple ports in one reference signal resource.

Information about the combinations of resources and ports for reference signals (for example, DMRS, SRS, etc.) may be configured in the UE. Also, information about the resources for these reference signals (for example, frequency resources (for example, the density in the frequency direction), time resources (the number of symbols, the timing, the cycle, etc.) and so forth) may be configured in the UE.

Note that the reference signals in the present specification may be transmitted and/or received based on the same configurations as those of the reference signals of the same names in existing LTE (for example, LTE Rel. 13), or may be transmitted and/or received based on different configurations. Moreover, DMRS, SRS and so on may be referred to as, for example, "NR-DMRS," "NR-SRS," and so on, respectively.

Beams may be identified by different directivities (precoding matrix) applied to the same reference signal (for example, DMRS, SRS, etc.). A beam may be specified by a beam index (BI), a PMI, a TPMI, a certain reference signal's port index (for example, a DMRS port index (DPI), an SRS port index (SPI), etc.), a certain reference signal's resource indicator (for example, CSI-RS resource indicator (CRI), DMRS resource index (DRI), SRS resource index (SRI), etc.) and so on.

Now, envisaging NR, research is underway to support codebook transmission (codebook-based transmission) and non-codebook transmission (non-codebook-based transmission). Generally, codebooks are designed without taking into account the correlation between antennas, the arrangement of panels and so on, and therefore codebook transmission does not always provide beams that are optimal for every UE's implementation. Also, for example, when UE carries many transmitting antennas, non-codebook transmission is effective for generating beams that are not limited to codebooks (such as very thin beams).

In both codebook transmission and non-codebook transmission, UE's transmitting beams may be determined in 2 patterns -- that is, (1) UE might make selections in a autonomous way, or (2) a gNB makes selections and report these to the UE. The above operation of (1) may be described using phrases like "UE-centric," "UE-centric mode," "UE-initiative control" and so forth, and the above operation of (2) may be described using phrases like "gNB-centric," "gNB-centric mode," "gNB-initiative control," "BS-centric" and so on.

In UE-centric operation, the UE may autonomously select transmitting beams and/or receiving beams for use. In this case, it is not necessary to report information related to transmitting beams and/or receiving beams (for example, BIs, TPMIs and so on, which have been mentioned earlier) from the gNB to the UE, so that the overhead can be reduced.

In UE-centric operation, the gNB may operate so as to assist the selection of beams by the UE. For this reason, UE-centric operation may be referred to as "gNB-assisted mode," "gNB-aided mode," and so on.

In gNB-centric operation, information related to transmitting beams and/or receiving beams (for example, information that indicates (specifies) beams) may be reported from the gNB to the UE. This information about transmitting beams and/or receiving beams may be reported by using higher layer signaling (for example, RRC signaling) and/or physical layer signaling (for example, DCI), or by combining these. Although gNB-centric operation requires overhead to report beams for UEs, it is effective for controlling interference, ensuring robustness and so on.

The gNB and/or the UE may judge whether gNB-centric and/or UE-centric operations are possible, based on information related to beam correspondence. Here, beam correspondence may refer to indicators to show the matching of transmitting beams and receiving beams, and may be referred to as, or described using phrases like, "transmitting/receiving beam correspondence (Tx/Rx beam correspondence)," "beam reciprocity," "beam calibration," "calibrated/non-calibrated," "reciprocity calibrated/non-calibrated," "the degree of correspondence," "the degree of matching," or simply "correspondence."

For example, as to how to judge whether or not there is correspondence, it may be judged that correspondence is "present" when a first beam (for example, a transmitting beam) and a second beam (for example, a receiving beam) match completely, or it may be judged that correspondence is "present" when the difference between both beams is within a certain threshold or stays within an allowable range. Also, the degree of correspondence may be a value that is calculated from the difference between both beams. Note that the difference between beams may be derived from beam specifying information, and may be, for example, at least one of the differences in the beam index, the difference in the beam coefficient, the difference in the beam angle and so on.

If correspondence is found at the UE, the TRP (for example, the gNB) and/or the UE may assume that following conditions (1) and/or (2) are fulfilled:
(1) the UE can select transmitting beams, which the UE might use for uplink transmission, based on downlink measurements at the UE using one or more receiving beams of the UE; and
(2) the UE can select receiving beams, which the UE might use for downlink receipt, based on commands that are sent from the TRP based on uplink measurements at the TRP using one or more of the transmitting beams of the UE.

Also, if correspondence is found at the TRP, the TRP and/or the UE may assume that following conditions (3) and/or (4) are fulfilled:
(3) the TRP can select receiving beams, which the TRP might use for uplink receipt, based on downlink measurements at the UE using one or more transmitting beams of the TRP; and
(4) the TRP can select transmitting beams, which the TRP might use for downlink transmission, based on uplink measurements at the TRP using one or more receiving beams of the TRP.

The information related to beam correspondence may be reported to the gNB and/or the UE by using higher layer signaling (for example, RRC signaling) and/or physical layer signaling (for example, DCI, UCI, etc.), or by combining these. If the UE has capabilities related to beam correspondence, the gNB and/or the UE may determine that the UE is capable of UE-centric operation. The UE may report UE capability information, which shows whether or not the UE has beam correspondence-related capabilities, to the gNB.

There may be an advantage in switching between UE centricity and gNB centricity on a dynamic basis. For example, if communication is suddenly disconnected (due to blocking (shadowing), interference, fading, and the like) during gNB-centric operation, communication can resume quickly by switching to UE-centric operation. Also, if the UE's transmitting beam interferes with neighboring cells during UE-centric operation, the interference can be reduced by switching to gNB-centric operation.

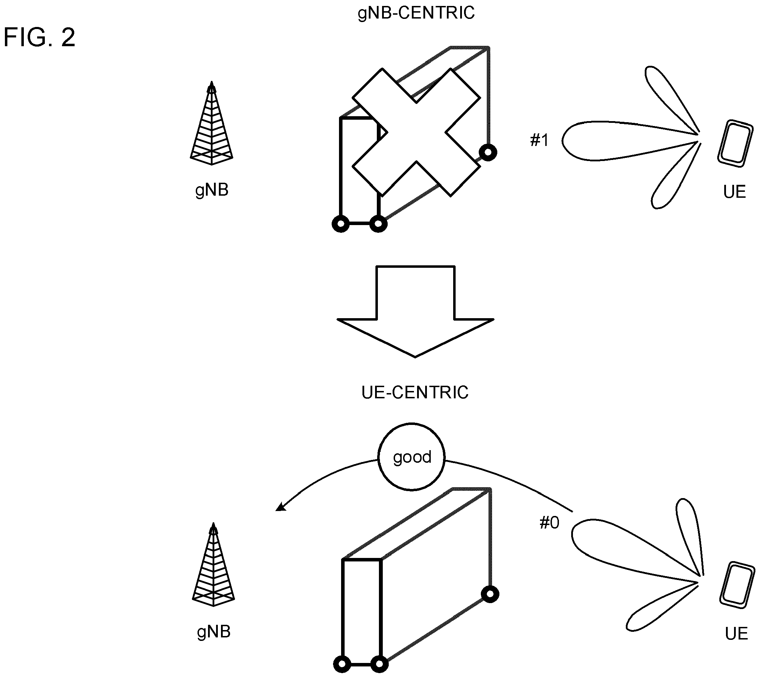

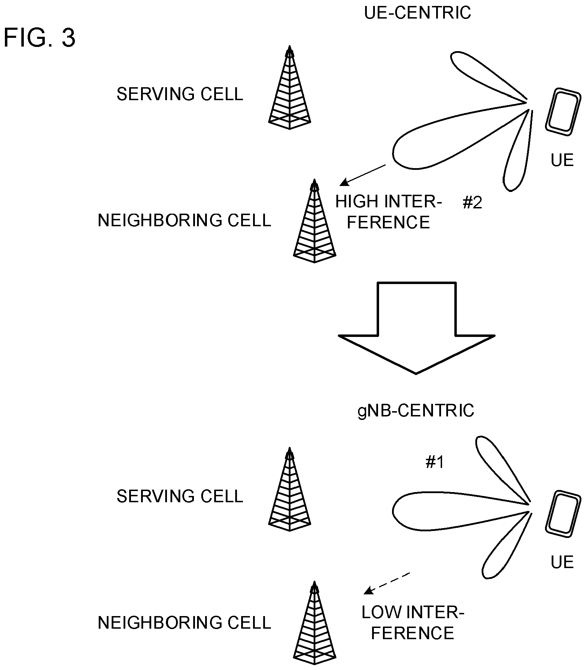

Now, this will be described below with reference to FIG. 2 and FIG. 3. Although the examples shown in FIG. 2 and FIG. 3 assume that the UE can use transmitting beams #0 to #2 shown in FIG. 1A, the beams available to the UE are not limited to these.

FIG. 2 is a diagram to show an example of switching from gNB centricity to UE centricity. The upper part of FIG. 2 shows an example, in which, while UE is communicating in a gNB-centric manner by using UE transmitting beam #1 that is specified by the gNB, the conditions of communication deteriorate due to an object (which may be referred to as an "obstacle," and which may be, for example, a vehicle, human body (hand, face, torso, etc.) and the like).

In this case, as shown at the bottom of FIG. 2, the UE can reduce the impact of beam failure by switching the method of selecting transmitting beams to the UE-centric method, and updating to a transmitting beam (for example, UE transmitting beam #0) that is less susceptible to obstacles.

FIG. 3 is a diagram to show an example of switching from UE centricity to gNB centricity. The upper part of FIG. 3 shows an example, in which the UE communicates in a serving cell in a UE-centric manner by using UE transmitting beam #2. However, UE transmitting beam #2 has a strong directivity directed to a neighboring cell, and interferes with the neighboring cell significantly.

In this case, as shown at the bottom of FIG. 3, when the gNB of the serving cell recognizes that the transmitting beam of the UE communicating in the serving cell interferes with a neighboring cell significantly (for example, when the serving cell acquires information about the interference from the neighbor cell via the X2 interface), the serving cell's gNB reports information to specify UE transmitting beam #1 (for example, TPMI), to the UE. The UE, upon receiving this information, updates the transmitting beam according to this information. By this means, the impact of interference can be reduced.

However, making it possible to freely switch between these 2 beam selection methods might lead to the situation where one switches the beam in a way that is unpredictable to the other one. In this case, the quality of communication, as well as communication throughput, may deteriorate unexpectedly.

So, the present inventors have come up with the idea of restricting switching of the beam selection method. According to one aspect of the present invention, it is possible to, for example, prevent UE, effectively, from switching beams against the intention of gNB.

Now, embodiments of the present invention will be described in detail below with reference to the accompanying drawings. The radio communication methods according to the herein-contained embodiments may be applied alone or may be applied in combination.

Note that "measurement" as used in the present specification may refer to the measurement of at least one of RSRP (Reference Signal Received Power), RSRQ (Reference Signal Received Quality), RSSI (Received Signal Strength Indicator), SINR (Signal to Interference plus Noise Ratio), SNR (Signal to Noise Ratio) and so on.

### (Radio Communication Method)

In one embodiment of the present invention, the condition for switching from gNB centricity to UE centricity is configured (reported) from the gNB to the UE. This condition may be referred to as "centricity switching condition," "centricity switching constraint" and/or the like, or may be simply referred to as "switching condition" and/or the like.

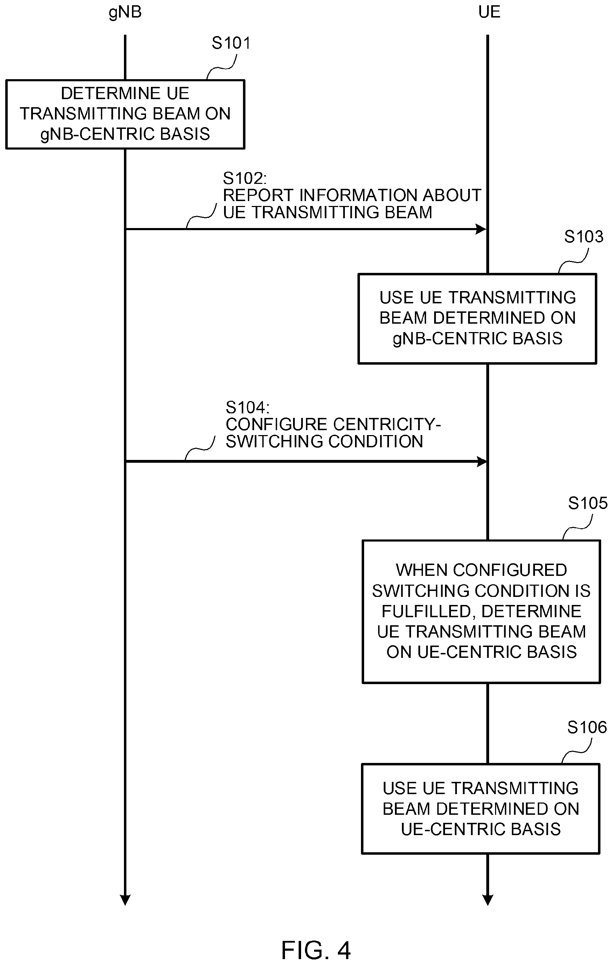

FIG. 4 is a diagram to show an example of the flow of switching centricity, according to one embodiment of the present invention. A gNB determines a UE transmitting beam in in a gNB-centric manner (step S101), and reports information about the determined UE transmitting beam (TPMI, and/or the like) to the UE (step S102). The UE transmits signals using the UE transmitting beam determined in a gNB-centric manner, based on the information reported from the gNB (step S103). In step S101 to S103, gNB-centric operation is carried out.

The gNB configures the condition for switching the centricity in the UE (step S104). Information regarding the centricity-switching condition (which may also be referred to as "information related to the switching condition") may be reported from the gNB to the UE through higher layer signaling (for example, RRC signaling, MAC signaling and/or physical layer signaling (for example, DCI), or by combining these.

The information about the centricity-switching condition may include information related to an event trigger for a certain measurement. For example, the information about the centricity-switching condition may include thresholds for one or more of RSRP, RSRQ, RSSI, SINR, SNR, and other power and/or quality metrics.

The UE switches the beam selection method when one or more of the conditions configured are fulfilled. In this case, the UE selects a UE transmitting beam in a UE-centric manner (step S105). For example, if an event trigger for a certain measurement is configured and this certain measurement derives a result that is less than or equal to (or less than) a threshold that is configured, the UE may switch from gNB-centric operation to UE-centric operation.

Also, the UE, when an event trigger for a certain measurement is configured, may report the result of the certain measurement (measurement report) to the gNB by using higher layer signaling and/or the like, at a certain timing. Note that the certain timing may be independent of the switching of centricity.

The gNB can predict, based on the measurement report, whether the UE is about to switch the centricity. For example, if the gNB judges that the measurement result of the UE is less than or equal to (or less than) a second threshold, the gNB may exert control to prepare for changing the UE's transmitting beam by sweeping the receiving beams. Here, the second threshold may be different from (for example, may be larger) or the same as the above-noted certain threshold. Thus, when the UE switches from gNB centricity to UE centricity, the gNB can select suitable receiving beams quickly.

Note that the information about the condition for switching the centricity may include information about radio link failures (RLFs)). For example, information about the switching of centricity may include information to indicate that the centricity is to be switched when an RLF occurs in the UE (or when the UE is judged to have an RLF).

Also, the information about the condition for switching the centricity may include information about the number of times a certain signal is transmitted (the number of retransmissions). In this case, if the number of times the certain signal is transmitted exceeds a configured number, the UE may switch the centricity.

This certain signal may be transmitted using at least one of an uplink shared channel (PUSCH (Physical Uplink Shared CHannel)), an uplink control channel (PUCCH (Physical Uplink Control CHannel)), a random access channel (PRACH (Physical Random Access CHannel)) and so on. For example, the certain signal may be certain UCI to contain delivery acknowledgement information (also referred to as "HARQ-ACK," "ACK/NACK," etc.), CSI and the like.

The information about the condition for switching the centricity may include information about how many times a certain condition is fulfilled. If the number of times a certain condition is fulfilled is configured in the UE and the certain condition is fulfilled the certain number of times or more in a certain period (for example, in one or more frames, subframes, slots, etc.), the UE may switch the centricity, and, otherwise, the UE does not have to switch the centricity.

Also, the information about the condition for switching the centricity may be information that specifies UE centricity. If the UE receives information to specify UE centricity, the UE may switch from gNB-centric operation to UE-centric operation. For example, if the gNB judges that the measurement result of the UE is less than or equal to (or less than) a second threshold based on the measurement report, the gNB may transmit information to specify UE centricity to the UE, to cause the UE to switch the centricity. In this case, whether or not to switch the centricity can be judged on the gNB side, so that it is possible to prevent the UE from inadvertently switching beams in a way that is unpredictable to the gNB.

Also, if the UE receives a particular index (for example, a TPMI), a particular beam index and/or the like in the codebook to use, the UE may switch from gNB-centric operation to UE-centric operation. That is, the UE may assume that a specific index serves as information to specify UE centricity.

For example, when the UE receives a particular TPMI, the UE may first operate by using the transmitting beam corresponding to this specific TPMI, and then operate in a UE-centric manner. As a result, it is possible to command switching of beams and centricity together, and so that the overhead due to the switching of centricity can be reduced.

When using subband precoding (also referred to as "frequency-selective precoding" and/or the like) that applies independent precoding weights per subband, the UE may select beams based on different centricities for wideband precoding spanning multiple subbands, and for this subband precoding.

For example, in the event of wideband precoding, the UE may operate based on gNB centricity (UE may perform wideband precoding using the index reported from gNB), and, in subband precoding, the UE may adjust each subband in a UE-centric manner. Note that, the same centricity may be applied to all subbands of multiple subbands, or UE centricity may be applied to a particular subband, while gNB centricity may be applied to another subband.

Note that the information about transmitting beams and/or receiving beams (for example, TPMI, BI, etc.) may be associated with at least one of UE centricity, gNB centricity, and switching of centricity, and information about this association may be reported to the UE by using higher layer signaling (for example, RRC signaling), physical layer signaling (for example, DCI) and so forth, or by combining these.

Also, the UE engaged in gNB-centric operation may switch to UE-centric operation when no information regarding transmitting beams and/or receiving beams is reported from the gNB for a certain period of time. Information about the certain period of time may be reported to the UE by higher layer signaling, physical layer signaling, or a combination of these.

Also, the information about the condition for switching the centricity may be information that commands handover. By this means, the transmitting beam selection method to use upon handover can be properly designated to the UE.

Note that information about the range of beams which the UE can use for in a UE-centric manner (for example, a beam group that contains one or more beams) may be reported to the UE by using higher layer signaling (for example, RRC signaling), physical layer signaling (for example, DCI) or a combination of these. This allows, for example, UE transmitting beams, which are selected by the UE in a UE-centric manner, to be kept within a range so that the gNB can receive these transmitting beams by using the then-used receiving beams, and, consequently, it is possible to improve the possibility that the gNB receives beams.

The UE transmits signals using the UE transmitting beam selected in a UE-centric manner (step S106). Note that the transmission parameters used to transmit the signal may be different than before the centricity is changed. For example, in the event the UE works in a UE-centric manner, at least one of the number of transmission layers, the number of ports and the number of panels may be different than when the UE operates in a gNB-centric manner, or different transmission diversity may be applied, a different mode of transmission may be applied, and so forth.

Transmission diversity may be determined based on which transmission diversity is used on the downlink, or may be determined based on techniques such as CDD (Cyclic Delay Diversity), SFBC (Space Frequency Block Coding), STBC (Space Time Block Code), FSTD (Frequency Switched Transmit Diversity), precoder cycling, antenna port switching and son on. Note that information about the transmission parameters (the number of transmission layers, transmission diversity, and so on, which have been mentioned earlier) that are available during UE-centric operation and/or gNB-centric operation may be configured in the UE by way of, for example, higher layer signaling.

Note that if the UE switches to UE-centric operation, the UE may transmit, to the gNB, at least one of information to indicate that the UE has switched to UE-centric operation (or during UE-centric operation), a notice of change of UE transmitting beams, and information about the beams the UE has switched to (for example, BI), and so on. These pieces of information related to the transmitting beams and/or receiving beams may be reported by using higher layer signaling (for example, RRC signaling, MAC signaling, etc.) and/or physical layer signaling (for example, DCI), or by combining these.

The gNB may perform beam sweeping, triggered by receipt of the information indicating that a switch has been made to UE-centric operation, and specify the UE's transmitting beams, changed in a UE-centric manner, and specify receiving beams that are suitable to the transmitting beams to which the UE has switched.

The information to indicate a switch to UE-centric operation may be sweeping request information, which requests sweeping, information to indicate that the BPL (transmitting beam and/or receiving beam) is not appropriate (for example, the quality is deteriorated, updating is needed, and so on), or may include these pieces of information.

Note that, when the UE engaged in UE-centric operation receives information about the transmitting beams and/or receiving beams (for example, PMI, TPMI, DPI, SPI, CRI, DRI, SRI, BI, beam group index, etc.), from the gNB, the UE may switch from UE-centric operation to gNB-centric operation. If the UE receives information to specify gNB centricity, the UE may switch from UE-centric operation to gNB-centric operation.

According to one embodiment of the present invention described above, UE can be prevented from exerting UE-centric control in a way that is unpredictable to a gNB, so that an unintended deterioration of communication quality, a deterioration of communication throughput, and so on can be reduced.

### (Variations)

Note that in the above embodiment, various pieces of information have been described as being reported by using transmitting beams, but this is by no means limiting. For example, information to serve as the condition for switching centricity, information to indicate that UE has switched to UE centricity, a notice of change of UE transmitting beams, information about the beams the UE has switched to (for example, BI) and so on may be transmitted on a carrier that is different from the carrier (cell, CC etc.) using the transmitting beams. The present invention is suitable for use in the event UE can communicate in a number of CCs by using carrier aggregation (CA) and/or dual connectivity (DC), in the event the UE can communicate by using technologies that are different from LTE (for example, Wi-Fi (registered trademark)).

Also, although the above embodiment has shown an example in which the method of selecting UE transmitting beams switches between UE centricity and gNB centricity, but this is by no means limiting. For example, the UE transmitting beams in the description of the above embodiment may be replaced with UE receiving beams. Also, a person skilled in the art should be able to understand how to switch between UE centricity and gNB centricity, from the method of selecting gNB transmitting beams and gNB receiving beams, by appropriately replacing UE and gNB (and/or uplink/downlink, transmission/receipt, and so forth) in the present specification.

UE-centricity and/or gNB-centricity may be changeable for each certain frequency band (for example, subband, resource block, etc.). Information about the condition for switching centricity may be configured per certain frequency band. By this means, when independent precoding weights are applied to each subband (also referred to as "subband precoding," "frequency-selective precoding," etc.), the amount of communication can be reduced adaptively.

UE-centricity and/or gNB-centricity may be controlled differently in the method of selecting transmitting beams and in the method of selecting receiving beams. Information about the condition for switching the centricity may be configured separately for transmitting beams and for receiving beams. For example, UE transmitting beams may be selected in a gNB-centric manner, and UE receiving beams may be selected in a UE-centric manner. This can increase the flexibility in control.

Note that the default beam selection method may be defined in advance by the specification, and may be configured by gNB, through higher layer signaling, and/or the like. For example, if the default transmitting beam selection method is UE-centric, UE may select transmitting beams in a UE-centric manner until, in step S102 of FIG. 4, information about UE transmitting beams is reported from the gNB. When a default beam selection method is configured, unintended behavior can be suppressed.

Also, the condition for switching centricity may be changed (reconfigured) based on the number of times centricity is switched, which is counted by the gNB and/or the UE. For example, if, in an environment where the quality of communication, represented by RSRP and the like, is not very good, the threshold for a certain measurement to serve as a condition for switching the centricity is configured too high, centricity has to be switched frequently, and the efficiency of control might decline.

Therefore, for example, when the number of times of switching centricity counted exceeds a certain value, the gNB transmits, to the UE, higher layer signaling that changes (for example, lowers) the threshold for the above-described measurement, and re-configure the switching condition. Also, if the number of times of switching the centricity counted exceeds a certain value, the UE may transmit a signal to request the gNB to change the threshold for the measurement, or may change the threshold for the measurement autonomously.

Also, the number of times of switching the centricity within a certain period of time may be limited. For example, information about the upper limit of the number of times of switching the centricity within a certain time may be reported to the UE through higher layer signaling or the like. In this case, even if the centricity is switched beyond the upper limit in the certain period of time, the switching can be ignored (for example, gNB-centricity can be maintained). This can prevent the centricity from being switched a large number of times.

### (Radio Communication System)

Now, the structure of the radio communication system according to one embodiment of the present invention will be described below. In this radio communication system, communication is performed using 1 or a combination of the radio communication methods according to the herein-contained embodiments of the present invention.

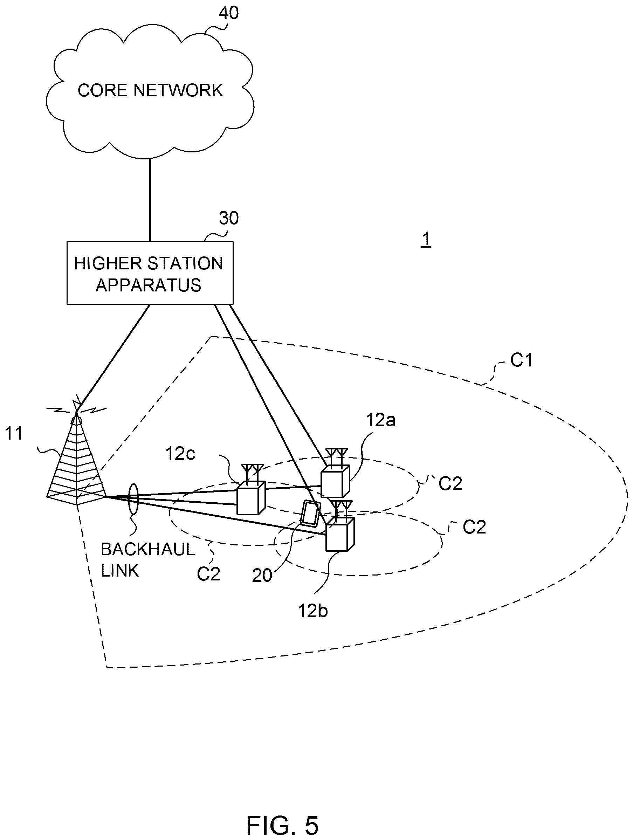

FIG. 5 is a diagram to show an exemplary schematic structure of a radio communication system according to one embodiment of the present invention. A radio communication system 1 can adopt carrier aggregation (CA) and/or dual connectivity (DC) to group a plurality of fundamental frequency blocks (component carriers) into one, where the LTE system bandwidth (for example, 20 MHz) constitutes 1 unit.

Note that the radio communication system 1 may be referred to as "LTE (Long Term Evolution)," "LTE-A (LTE-Advanced)," "LTE-B (LTE-Beyond)," "SUPER 3G, "IMT-Advanced," "4G (4th generation mobile communication system)," "5G (5th generation mobile communication system)," "FRA (Future Radio Access)," "New-RAT (Radio Access Technology)" and so on, or may be seen as a system to implement these.

The radio communication system 1 includes a radio base station 11 that forms a macro cell C1, with a relatively wide coverage, and radio base stations 12a to 12c that are placed within the macro cell C1 and that form small cells C2, which are narrower than the macro cell C1. Also, user terminals 20 are placed in the macro cell C1 and in each small cell C2. The arrangement, number and so on of cells and user terminals are not limited to those illustrated in the drawings.

The user terminals 20 can connect with both the radio base station 11 and the radio base stations 12. The user terminals 20 may use the macro cell C1 and the small cells C2 at the same time by means of CA or DC. Furthermore, the user terminals 20 may apply CA or DC using a number of cells (CCs) (for example, 5 or fewer CCs or 6 or more CCs).

Between the user terminals 20 and the radio base station 11, communication can be carried out using a carrier of a relatively low frequency bandwidth (for example, 2 GHz) and a narrow bandwidth (referred to as, for example, an "existing carrier," a "legacy carrier" and so on). Meanwhile, between the user terminals 20 and the radio base stations 12, a carrier of a relatively high frequency bandwidth (for example, 3.5 GHz, 5 GHz and so on) and a wide bandwidth may be used, or the same carrier as that used in the radio base station 11 may be used. Note that the structure of the frequency bandwidth for use in each radio base station is by no means limited to these.

A structure may be employed here in which wire connection (for example, means in compliance with the CPRI (Common Public Radio Interface) such as optical fiber, the X2 interface and so on) or wireless connection is established between the radio base station 11 and the radio base station 12 (or between 2 radio base stations 12).

The radio base station 11 and the radio base stations 12 are each connected with higher station apparatus 30, and are connected with a core network 40 via the higher station apparatus 30. Note that the higher station apparatus 30 may be, for example, access gateway apparatus, a radio network controller (RNC), a mobility management entity (MME) and so on, but is by no means limited to these. Also, each radio base station 12 may be connected with the higher station apparatus 30 via the radio base station 11.

Note that the radio base station 11 is a radio base station having a relatively wide coverage, and may be referred to as a "macro base station," a "central node," an "eNB (eNodeB)," a "transmitting/receiving point" and so on. Also, the radio base stations 12 are radio base stations having local coverages, and may be referred to as "small base stations," "micro base stations," "pico base stations," "femto base stations," "HeNBs (Home eNodeBs)," "RRHs (Remote Radio Heads)," "transmitting/receiving points" and so on. Hereinafter the radio base stations 11 and 12 will be collectively referred to as "radio base stations 10," unless specified otherwise.

The user terminals 20 are terminals to support various communication schemes such as LTE, LTE-A and so on, and may be either mobile communication terminals (mobile stations) or stationary communication terminals (fixed stations).

In the radio communication system 1, as radio access schemes, orthogonal frequency division multiple access (OFDMA) is applied to the downlink, and single-carrier frequency division multiple access (SC-FDMA) is applied to the uplink.

OFDMA is a multi-carrier communication scheme to perform communication by dividing a frequency bandwidth into a plurality of narrow frequency bandwidths (subcarriers) and mapping data to each subcarrier. SC-FDMA is a single-carrier communication scheme to mitigate interference between terminals by dividing the system bandwidth into bands formed with 1 or contiguous resource blocks per terminal, and allowing a plurality of terminals to use mutually different bands. Note that the uplink and downlink radio access schemes are not limited to these combinations, and other radio access schemes may be used.

In the radio communication system 1, a downlink shared channel (PDSCH (Physical Downlink Shared CHannel)), which is used by each user terminal 20 on a shared basis, a broadcast channel (PBCH (Physical Broadcast CHannel)), downlink L1/L2 control channels and so on are used as downlink channels. User data, higher layer control information and SIBs (System Information Blocks) are communicated in the PDSCH. Also, the MIB (Master Information Block) is communicated in the PBCH.

The downlink L1/L2 control channels include a PDCCH (Physical Downlink Control CHannel), an EPDCCH (Enhanced Physical Downlink Control CHannel), a PCFICH (Physical Control Format Indicator CHannel), a PHICH (Physical Hybrid-ARQ Indicator CHannel) and so on. Downlink control information (DCI), including PDSCH and PUSCH scheduling information, is communicated by the PDCCH. The number of OFDM symbols to use for the PDCCH is communicated by the PCFICH. HARQ (Hybrid Automatic Repeat reQuest) delivery acknowledgment information (also referred to as, for example, "retransmission control information," "HARQ-ACKs," "ACK/NACKs," etc.) in response to the PUSCH is transmitted by the PHICH. The EPDCCH is frequency-division-multiplexed with the PDSCH (downlink shared data channel) and used to communicate DCI and so on, like the PDCCH.

In the radio communication system 1, an uplink shared channel (PUSCH (Physical Uplink Shared CHannel)), which is used by each user terminal 20 on a shared basis, an uplink control channel (PUCCH (Physical Uplink Control CHannel)), a random access channel (PRACH (Physical Random Access CHannel)) and so on are used as uplink channels. User data, higher layer control information and so on are communicated by the PUSCH. Also, downlink radio quality information (CQI (Channel Quality Indicator)), delivery acknowledgement information and so on are communicated by the PUCCH. By means of the PRACH, random access preambles for establishing connections with cells are communicated.

In the radio communication systems 1, the cell-specific reference signal (CRS (Cell-specific Reference Signal)), the channel state information reference signal (CSI-RS (Channel State Information-Reference Signal)), the demodulation reference signal (DMRS (DeModulation Reference Signal)), the positioning reference signal (PRS (Positioning Reference Signal)) and so on are communicated as downlink reference signals. Also, in the radio communication system 1, the measurement reference signal (SRS (Sounding Reference Signal)), the demodulation reference signal (DMRS) and so on are communicated as uplink reference signals. Note that the DMRS may be referred to as a "user terminal-specific reference signal (UE-specific Reference Signal)." Also, the reference signals to be communicated are by no means limited to these.

### (Radio Base Station)

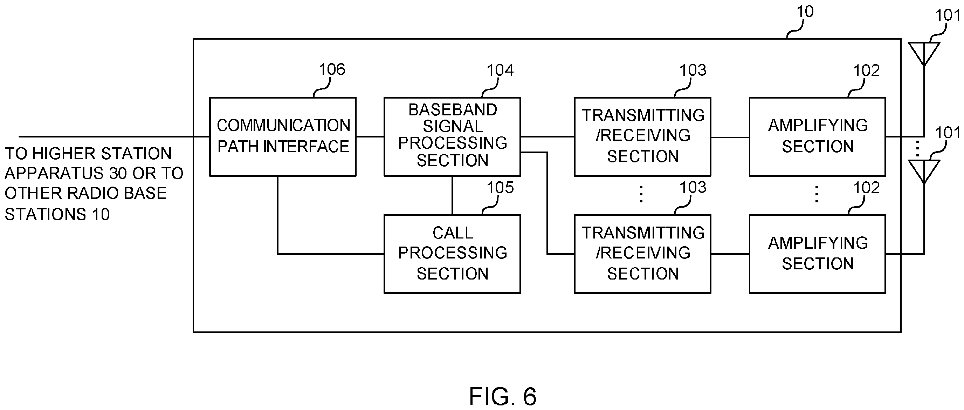

FIG. 6 is a diagram to show an exemplary overall structure of a radio base station according to one embodiment of the present invention. A radio base station 10 has a plurality of transmitting/receiving antennas 101, amplifying sections 102, transmitting/receiving sections 103, a baseband signal processing section 104, a call processing section 105 and a communication path interface 106. Note that one or more transmitting/receiving antennas 101, amplifying sections 102 and transmitting/receiving sections 103 may be provided.

User data to be transmitted from the radio base station 10 to a user terminal 20 on the downlink is input from the higher station apparatus 30 to the baseband signal processing section 104, via the communication path interface 106.

In the baseband signal processing section 104, the user data is subjected to transmission processes, including a PDCP (Packet Data Convergence Protocol) layer process, user data division and coupling, RLC (Radio Link Control) layer transmission processes such as RLC retransmission control, MAC (Medium Access Control) retransmission control (for example, an HARQ (Hybrid Automatic Repeat reQuest) transmission process), scheduling, transport format selection, channel coding, an inverse fast Fourier transform (IFFT) process and a precoding process, and the result is forwarded to each transmitting/receiving section 103. Furthermore, downlink control signals are also subjected to transmission processes such as channel coding and an inverse fast Fourier transform, and forwarded to each transmitting/receiving section 103.

Baseband signals that are precoded and output from the baseband signal processing section 104 on a per antenna basis are converted into a radio frequency band in the transmitting/receiving sections 103, and then transmitted. The radio frequency signals having been subjected to frequency conversion in the transmitting/receiving sections 103 are amplified in the amplifying sections 102, and transmitted from the transmitting/receiving antennas 101. The transmitting/receiving sections 103 can be constituted by transmitters/receivers, transmitting/receiving circuits or transmitting/receiving apparatus that can be described based on general understanding of the technical field to which the present invention pertains. Note that a transmitting/receiving section 103 may be structured as a transmitting/receiving section in one entity, or may be constituted by a transmitting section and a receiving section.

Meanwhile, as for uplink signals, radio frequency signals that are received in the transmitting/receiving antennas 101 are each amplified in the amplifying sections 102. The transmitting/receiving sections 103 receive the uplink signals amplified in the amplifying sections 102. The received signals are converted into the baseband signal through frequency conversion in the transmitting/receiving sections 103 and output to the baseband signal processing section 104.

In the baseband signal processing section 104, user data that is included in the uplink signals that are input is subjected to a fast Fourier transform (FFT) process, an inverse discrete Fourier transform (IDFT) process, error correction decoding, a MAC retransmission control receiving process, and RLC layer and PDCP layer receiving processes, and forwarded to the higher station apparatus 30 via the communication path interface 106. The call processing section 105 performs call processing (such as setting up and releasing communication channels), manages the state of the radio base stations 10 and manages the radio resources.

The communication path interface section 106 transmits and receives signals to and from the higher station apparatus 30 via a certain interface. Also, the communication path interface 106 may transmit and receive signals (backhaul signaling) with other radio base stations 10 via an inter-base station interface (which is, for example, optical fiber that is in compliance with the CPRI (Common Public Radio Interface), the X2 interface, etc.).

Note that the transmitting/receiving sections 103 may furthermore have an analog beamforming section that forms analog beams. The analog beamforming section may be constituted by an analog beamforming circuit (for example, a phase shifter, a phase shifting circuit, etc.) or analog beamforming apparatus (for example, a phase shifting device) that can be described based on general understanding of the technical field to which the present invention pertains. Furthermore, the transmitting/receiving antennas 101 may be constituted by, for example, array antennas.

The transmitting/receiving sections 103 may transmit signals using transmitting beams, or receive signals using receiving beams. Transmitting/receiving sections 103 may transmit and/or receive signals using certain beams determined by control section 301.

The transmitting/receiving sections 103 may transmit, as information to serve as the condition for switching centricity, event trigger information corresponding to a certain measurement (for example, a threshold for a certain measurement), information about RLF, information about the number of times to transmit a certain signal and/or the like, to the user terminal 20. Also, the transmitting/receiving sections 103 may transmit and/or receive information about transmitting beams and/or receiving beams, information about beam correspondence, and/or the like.

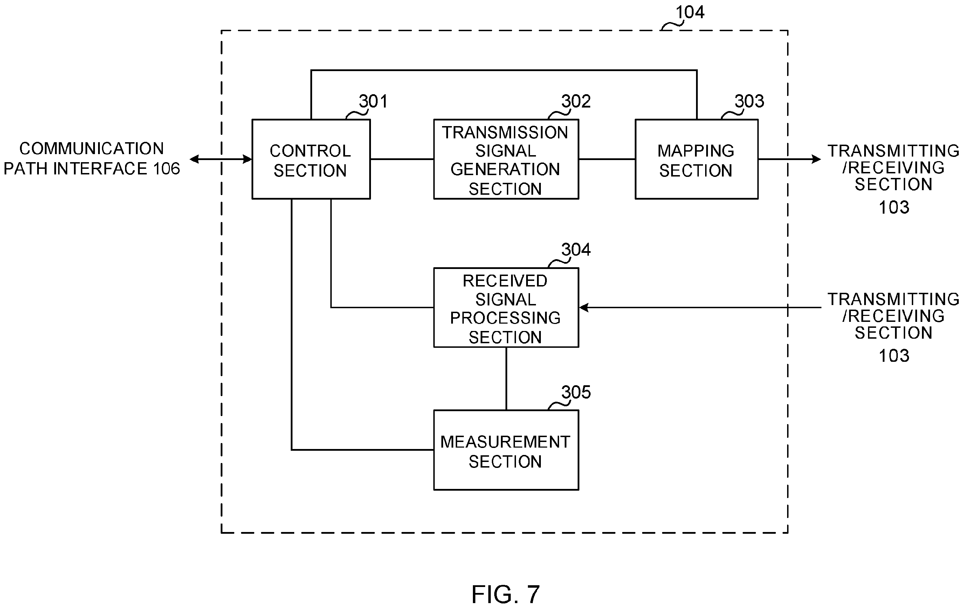

FIG. 7 is a diagram to show an exemplary functional structure of a radio base station according to one embodiment of the present invention. Note that, although this example primarily shows functional blocks that pertain to characteristic parts of the present embodiment, the radio base station 10 has other functional blocks that are necessary for radio communication as well.

The baseband signal processing section 104 at least has a control section (scheduler) 301, a transmission signal generation section 302, a mapping section 303, a received signal processing section 304 and a measurement section 305. Note that these configurations have only to be included in the radio base station 10, and some or all of these configurations may not be included in the baseband signal processing section 104.

The control section (scheduler) 301 controls the whole of the radio base station 10. The control section 301 can be constituted by a controller, a control circuit or control apparatus that can be described based on general understanding of the technical field to which the present invention pertains.

The control section 301, for example, controls the generation of signals in the transmission signal generation section 302, the allocation of signals by the mapping section 303, and so on. Furthermore, the control section 301 controls the signal receiving processes in the received signal processing section 304, the measurements of signals in the measurement section 305, and so on.

The control section 301 controls the scheduling (for example, resource allocation) of system information, downlink data signals (for example, signals transmitted in the PDSCH) and downlink control signals (for example, signals transmitted in the PDSCH and/or the EPDCCH, such as delivery acknowledgement information) and so on. The control section 301 controls the generation of downlink control signals, downlink data signals and so on, based on the results of deciding whether or not retransmission control is necessary for uplink data signals, and so on. Also, the control section 301 controls the scheduling of synchronization signals (for example, the PSS (Primary Synchronization Signal)/SSS (Secondary Synchronization Signal)), downlink reference signals (for example, the CRS, the CSI-RS, the DMRS, etc.) and so on.

The control section 301 also controls the scheduling of uplink data signals (for example, signals transmitted in the PUSCH), uplink control signals (for example, signals transmitted in the PUCCH and/or the PUSCH, such as delivery acknowledgment information), random access preambles (for example, signals transmitted in the PRACH), and uplink reference signals.

The control section 301 may exert control so that transmitting beams and/or receiving beams are formed by using digital BF (for example, precoding) in the baseband signal processing section 104 and/or by using analog BF (for example, phase rotation) in the transmitting/receiving sections 103. The control section 301 may exert control so that beams are formed based on downlink transmission path information, uplink transmission path information and so on. These pieces of propagation path information may be obtained from the received signal processing section 304 and/or the measurement section 305.

The control section 301 may switch between a third beam selection process (selection method) of selecting a certain beam (for example, a transmitting beam and/or a receiving beam) based on information about beams reported from the user terminal 20, and a fourth beam selection process (selection method) of selecting the above certain beam autonomously based on information about a certain switching condition (condition for switching the centricity). The third beam selection process may be referred to as "UE-centric." The fourth beam selection process may be referred to as "gNB-centric."

The control section 301 may switch the above control by using, as information about the condition for switching the centricity, at least one of event trigger information corresponding to a certain measurement (for example, a threshold for a certain measurement), information about RLF, and information about the number of times a certain signal is transmitted. Here, the certain signal may be transmitted in at least one of PDCCH, PDSCH, and the like. For example, the certain signal may be delivery acknowledgement information (HARQ-ACK) or the like.

Also, the control section 301 may exert control so that information about the condition for switching the centricity used by the user terminal 20 is determined, and transmitted to the user terminal 20.

The transmission signal generation section 302 generates downlink signals (downlink control signals, downlink data signals, downlink reference signals and so on) based on commands from the control section 301, and outputs these signals to the mapping section 303. The transmission signal generation section 302 can be constituted by a signal generator, a signal generating circuit or signal generating apparatus that can be described based on general understanding of the technical field to which the present invention pertains.

For example, the transmission signal generation section 302 generates DL assignments, which report downlink signal allocation information, and UL grants, which report uplink signal allocation information, based on commands from the control section 301. Also, the downlink data signals are subjected to the coding process, the modulation process and so on, by using coding rates and modulation schemes that are determined based on, for example, channel state information (CSI) from each user terminal 20.

The mapping section 303 maps the downlink signals generated in the transmission signal generation section 302 to certain radio resources based on commands from the control section 301, and outputs these to the transmitting/receiving sections 103. The mapping section 303 can be constituted by a mapper, a mapping circuit or mapping apparatus that can be described based on general understanding of the technical field to which the present invention pertains.

The received signal processing section 304 performs receiving processes (for example, demapping, demodulation, decoding and so on) of received signals that are input from the transmitting/receiving sections 103. Here, the received signals include, for example, uplink signals transmitted from the user terminals 20 (uplink control signals, uplink data signals, uplink reference signals and so on). For the received signal processing section 304, a signal processor, a signal processing circuit or signal processing apparatus that can be described based on general understanding of the technical field to which the present invention pertains can be used.

The received signal processing section 304 outputs the decoded information acquired through the receiving processes to the control section 301. For example, when a PUCCH to contain an HARQ-ACK is received, the received signal processing section 304 outputs this HARQ-ACK to the control section 301. Also, the received signal processing section 304 outputs the received signals and/or the signals after the receiving processes to the measurement section 305.

The measurement section 305 conducts measurements with respect to the received signals. The measurement section 305 can be constituted by a measurer, a measurement circuit or measurement apparatus that can be described based on general understanding of the technical field to which the present invention pertains.

For example, the measurement section 305 may perform RRM (Radio Resource Management) measurements, CSI (Channel State Information) measurements and so on, based on the received signals. The measurement section 305 may measure the received power (for example, RSRP (Reference Signal Received Power)), the received quality (for example, RSRQ (Reference Signal Received Quality), SINR (Signal to Interference plus Noise Ratio), SNR (Signal to Noise Ratio), etc.), the signal strength (for example, RSSI (Received Signal Strength Indicator)), propagation path information (for example, CSI), and so on. The measurement results may be output to the control section 301.

### (User Terminal)

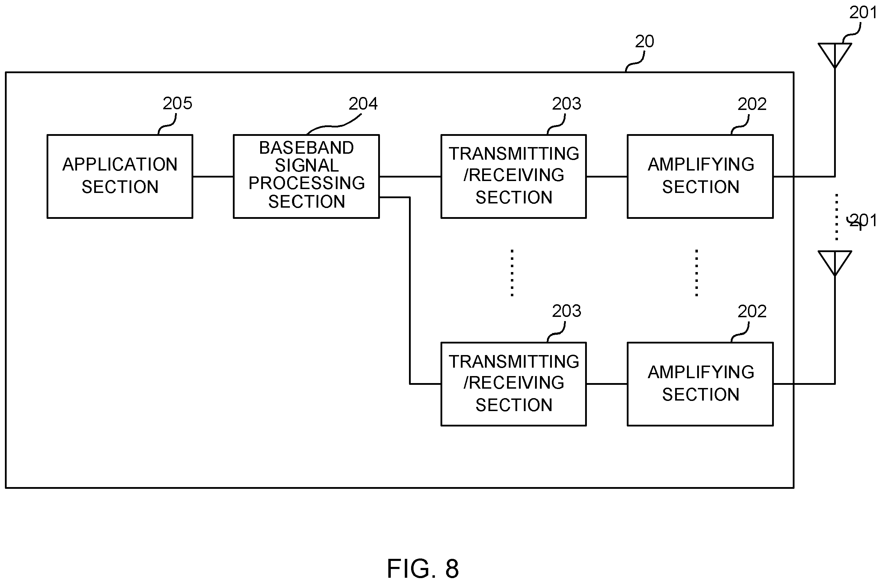

FIG. 8 is a diagram to show an exemplary overall structure of a user terminal according to one embodiment of the present invention. A user terminal 20 has a plurality of transmitting/receiving antennas 201, amplifying sections 202, transmitting/receiving sections 203, a baseband signal processing section 204 and an application section 205. Note that one or more transmitting/receiving antennas 201, amplifying sections 202 and transmitting/receiving sections 203 may be provided.

Radio frequency signals that are received in the transmitting/receiving antennas 201 are amplified in the amplifying sections 202. The transmitting/receiving sections 203 receive the downlink signals amplified in the amplifying sections 202. The received signals are subjected to frequency conversion and converted into the baseband signal in the transmitting/receiving sections 203, and output to the baseband signal processing section 204. A transmitting/receiving section 203 can be constituted by a transmitters/receiver, a transmitting/receiving circuit or transmitting/receiving apparatus that can be described based on general understanding of the technical field to which the present invention pertains. Note that a transmitting/receiving section 203 may be structured as a transmitting/receiving section in one entity, or may be constituted by a transmitting section and a receiving section.

The baseband signal processing section 204 performs, for the baseband signal that is input, an FFT process, error correction decoding, a retransmission control receiving process and so on. Downlink user data is forwarded to the application section 205. The application section 205 performs processes related to higher layers above the physical layer and the MAC layer, and so on. Also, in the downlink data, the broadcast information can be also forwarded to the application section 205.

Meanwhile, uplink user data is input from the application section 205 to the baseband signal processing section 204. The baseband signal processing section 204 performs a retransmission control transmission process (for example, an HARQ transmission process), channel coding, precoding, a discrete Fourier transform (DFT) process, an IFFT process and so on, and the result is forwarded to the transmitting/receiving sections 203. Baseband signals that are output from the baseband signal processing section 204 are converted into a radio frequency band in the transmitting/receiving sections 203 and transmitted. The radio frequency signals that are subjected to frequency conversion in the transmitting/receiving sections 203 are amplified in the amplifying sections 202, and transmitted from the transmitting/receiving antennas 201.

Note that the transmitting/receiving sections 203 may furthermore have an analog beamforming section that forms analog beams. The analog beamforming section may be constituted by an analog beamforming circuit (for example, a phase shifter, a phase shifting circuit, etc.) or analog beamforming apparatus (for example, a phase shifting device) that can be described based on general understanding of the technical field to which the present invention pertains. Furthermore, the transmitting/receiving antennas 201 may be constituted by, for example, array antennas.

The transmitting/receiving sections 203 may transmit signals using transmitting beams, or receive signals using receiving beams. The transmitting/receiving sections 203 may transmit and/or receive signals using certain beams determined by control section 401.

The transmitting/receiving sections 203 may receive, as information to serve as the condition for switching centricity, event trigger information corresponding to a certain measurement (for example, a threshold for a certain measurement), information about RLF, information about the number of times to transmit a certain signal and/or the like, from the radio base station 10. Also, the transmitting/receiving sections 203 may transmit and/or receive information about transmitting beams and/or receiving beams, information about beam correspondence, and the like.

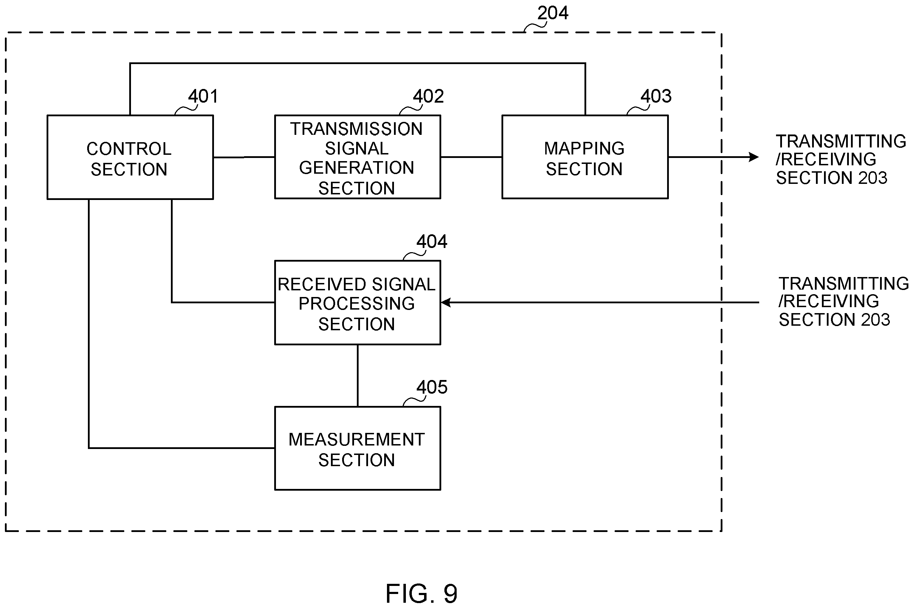

FIG. 9 is a diagram to show an exemplary functional structure of a user terminal according to one embodiment of the present invention. Note that, although this example primarily shows functional blocks that pertain to characteristic parts of the present embodiment, the user terminal 20 has other functional blocks that are necessary for radio communication as well.

The baseband signal processing section 204 provided in the user terminal 20 at least has a control section 401, a transmission signal generation section 402, a mapping section 403, a received signal processing section 404 and a measurement section 405. Note that these configurations have only to be included in the user terminal 20, and some or all of these configurations may not be included in the baseband signal processing section 204.

The control section 401 controls the whole of the user terminal 20. For the control section 401, a controller, a control circuit or control apparatus that can be described based on general understanding of the technical field to which the present invention pertains can be used.

The control section 401, for example, controls the generation of signals in the transmission signal generation section 402, the allocation of signals in the mapping section 403, and so on. Furthermore, the control section 401 controls the signal receiving processes in the received signal processing section 404, the measurements of signals in the measurement section 405, and so on.

The control section 401 acquires the downlink control signals and downlink data signals transmitted from the radio base station 10, via the received signal processing section 404. The control section 401 controls the generation of uplink control signals and/or uplink data signals based on the results of deciding whether or not retransmission control is necessary for the downlink control signals and/or downlink data signals, and so on.

The control section 401 may exert control so that transmitting beams and/or receiving beams are formed by using digital BF (for example, precoding) by the baseband signal processing section 204 and/or by using analog BF (for example, phase rotation) by the transmitting/receiving sections 203. The control section 401 may exert control so that beams are formed based on downlink transmission path information, uplink transmission path information, and so on. These pieces of propagation path information may be obtained from the received signal processing section 404 and/or the measurement section 405.

The control section 401 may exert control so that a first beam selection process (selection method) of selecting a certain beam (for example, a transmitting beam and/or a receiving beam) based on reported information about beams, and a second beam selection process (selection method) of selecting the above certain beam autonomously can be switched based on information about a certain switching condition (condition for switching the centricity). The first beam selection process may be referred to as "gNB-centric." The second beam selection process may be referred to as "UE-centric."

The control section 401 may switch the control using, as information about the condition for switching the centricity, at least one of event trigger information corresponding to a certain measurement (for example, a threshold for a certain measurement), information about RLF, information about the number of times a certain signal is transmitted, and/or the like.

Furthermore, when various kinds of information reported from the radio base station 10 are acquired via the received signal processing section 404, the control section 401 may update the parameters to use in control based on these pieces of information.

The transmission signal generation section 402 generates uplink signals (uplink control signals, uplink data signals, uplink reference signals and so on) based on commands from the control section 401, and outputs these signals to the mapping section 403. The transmission signal generation section 402 can be constituted by a signal generator, a signal generating circuit or signal generating apparatus that can be described based on general understanding of the technical field to which the present invention pertains.

For example, the transmission signal generation section 402 generates uplink control signals related to delivery acknowledgement information, channel state information (CSI) and so on, based on commands from the control section 401. Also, the transmission signal generation section 402 generates uplink data signals based on commands from the control section 401. For example, when a UL grant is included in a downlink control signal that is reported from the radio base station 10, the control section 401 commands the transmission signal generation section 402 to generate an uplink data signal.

The mapping section 403 maps the uplink signals generated in the transmission signal generation section 402 to radio resources based on commands from the control section 401, and outputs the result to the transmitting/receiving sections 203. The mapping section 403 can be constituted by a mapper, a mapping circuit or mapping apparatus that can be described based on general understanding of the technical field to which the present invention pertains.

The received signal processing section 404 performs receiving processes (for example, demapping, demodulation, decoding and so on) of received signals that are input from the transmitting/receiving sections 203. Here, the received signals include, for example, downlink signals (downlink control signals, downlink data signals, downlink reference signals and so on) that are transmitted from the radio base station 10. The received signal processing section 404 can be constituted by a signal processor, a signal processing circuit or signal processing apparatus that can be described based on general understanding of the technical field to which the present invention pertains. Also, the received signal processing section 404 can constitute the receiving section according to the present invention.

The received signal processing section 404 outputs the decoded information, acquired through the receiving processes, to the control section 401. The received signal processing section 404 outputs, for example, broadcast information, system information, RRC signaling, DCI and so on, to the control section 401. Also, the received signal processing section 404 outputs the received signals and/or the signals after the receiving processes to the measurement section 405.

The measurement section 405 conducts measurements with respect to the received signals. The measurement section 405 can be constituted by a measurer, a measurement circuit or measurement apparatus that can be described based on general understanding of the technical field to which the present invention pertains.

For example, the measurement section 405 may perform RRM measurements, CSI measurements and so on based on the received signals. The measurement section 405 may measure the received power (for example, RSRP), the received quality (for example, RSRQ, SINR, SNR, etc.), the signal strength (for example, RSSI), propagation path information (for example, CSI), and so on. The measurement results may be output to the control section 401.

### (Hardware Structure)

Note that the block diagrams that have been used to describe the above embodiments show blocks in functional units. These functional blocks (components) may be implemented in arbitrary combinations of hardware and/or software. Also, the means for implementing each functional block is not particularly limited. That is, each functional block may be realized by one piece of apparatus that is physically and/or logically aggregated, or may be realized by directly and/or indirectly connecting two or more physically and/or logically separate pieces of apparatus (via wire or wireless, for example) and using these multiple pieces of apparatus.

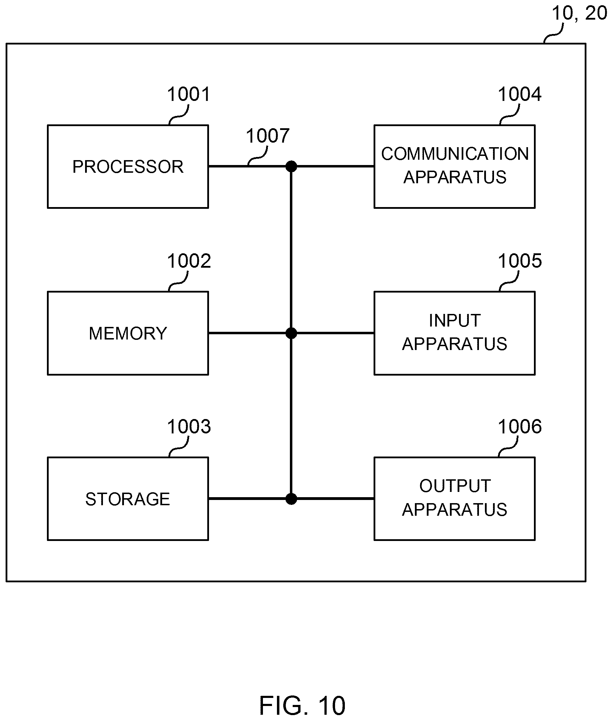

For example, the radio base station, user terminals and so on according to embodiments of the present invention may function as a computer that executes the processes of the radio communication method of the present invention. FIG. 10 is a diagram to show an exemplary hardware structure of a radio base station and a user terminal according to one embodiment of the present invention. Physically, the above-described radio base stations 10 and user terminals 20 may be formed as a computer apparatus that includes a processor 1001, a memory 1002, a storage 1003, communication apparatus 1004, input apparatus 1005, output apparatus 1006 and a bus 1007.

Note that, in the following description, the word "apparatus" may be replaced by "circuit," "device," "unit" and so on. Note that the hardware structure of a radio base station 10 and a user terminal 20 may be designed to include one or more of each apparatus shown in the drawings, or may be designed not to include part of the apparatus.

For example, although only 1 processor 1001 is shown, a plurality of processors may be provided. Furthermore, processes may be implemented with one processor, or processes may be implemented in sequence, or in different manners, on one or more processors. Note that the processor 1001 may be implemented with one or more chips.

Each function of the radio base station 10 and the user terminal 20 is implemented by reading certain software (program) on hardware such as the processor 1001 and the memory 1002, and by controlling the calculations in the processor 1001, the communication in the communication apparatus 1004, and the reading and/or writing of data in the memory 1002 and the storage 1003.

The processor 1001 may control the whole computer by, for example, running an operating system. The processor 1001 may be configured with a central processing unit (CPU), which includes interfaces with peripheral apparatus, control apparatus, computing apparatus, a register and so on. For example, the above-described baseband signal processing section 104 (204), call processing section 105 and so on may be implemented by the processor 1001.

Furthermore, the processor 1001 reads programs (program codes), software modules, data and so forth from the storage 1003 and/or the communication apparatus 1004, into the memory 1002, and executes various processes according to these. As for the programs, programs to allow computers to execute at least part of the operations of the above-described embodiments may be used. For example, the control section 401 of the user terminals 20 may be implemented by control programs that are stored in the memory 1002 and that operate on the processor 1001, and other functional blocks may be implemented likewise.

The memory 1002 is a computer-readable recording medium, and may be constituted by, for example, at least one of a ROM (Read Only Memory), an EPROM (Erasable Programmable ROM), an EEPROM (Electrically EPROM), a RAM (Random Access Memory) and/or other appropriate storage media. The memory 1002 may be referred to as a "register," a "cache," a "main memory" (primary storage apparatus) and so on. The memory 1002 can store executable programs (program codes), software modules and so on for implementing the radio communication methods according to embodiments of the present invention.

The storage 1003 is a computer-readable recording medium, and may be constituted by, for example, at least one of a flexible disk, a floppy (registered trademark) disk, a magneto-optical disk (for example, a compact disc (CD-ROM (Compact Disc ROM) and so on), a digital versatile disc, a Blu-ray (registered trademark) disk), a removable disk, a hard disk drive, a smart card, a flash memory device (for example, a card, a stick, a key drive, etc.), a magnetic stripe, a database, a server, and/or other appropriate storage media. The storage 1003 may be referred to as "secondary storage apparatus."

The communication apparatus 1004 is hardware (transmitting/receiving device) for allowing inter-computer communication by using wired and/or wireless networks, and may be referred to as, for example, a "network device," a "network controller," a "network card," a "communication module" and so on. The communication apparatus 1004 may be configured to include a high frequency switch, a duplexer, a filter, a frequency synthesizer and so on in order to realize, for example, frequency division duplex (FDD) and/or time division duplex (TDD). For example, the above-described transmitting/receiving antennas 101 (201), amplifying sections 102 (202), transmitting/receiving sections 103 (203), communication path interface 106 and so on may be implemented by the communication apparatus 1004.

The input apparatus 1005 is an input device for receiving input from the outside (for example, a keyboard, a mouse, a microphone, a switch, a button, a sensor and so on). The output apparatus 1006 is an output device for allowing sending output to the outside (for example, a display, a speaker, an LED (Light Emitting Diode) lamp and so on). Note that the input apparatus 1005 and the output apparatus 1006 may be provided in an integrated structure (for example, a touch panel).

Furthermore, these pieces of apparatus, including the processor 1001, the memory 1002 and so on are connected by the bus 1007 so as to communicate information. The bus 1007 may be formed with a single bus, or may be formed with buses that vary between pieces of apparatus.

Also, the radio base station 10 and the user terminal 20 may be structured to include hardware such as a microprocessor, a digital signal processor (DSP), an ASIC (Application-Specific Integrated Circuit), a PLD (Programmable Logic Device), an FPGA (Field Programmable Gate Array) and so on, and part or all of the functional blocks may be implemented by the hardware. For example, the processor 1001 may be implemented with at least one of these pieces of hardware.

### (Variations)

Note that the terminology used in this specification and the terminology that is needed to understand this specification may be replaced by other terms that convey the same or similar meanings. For example, "channels" and/or "symbols" may be replaced by "signals (or "signaling")." Also, "signals" may be "messages." A reference signal may be abbreviated as an "RS," and may be referred to as a "pilot," a "pilot signal" and so on, depending on which standard applies. Furthermore, a "component carrier (CC)" may be referred to as a "cell," a "frequency carrier," a "carrier frequency" and so on.

Furthermore, a radio frame may be comprised of one or more periods (frames) in the time domain. Each of one or more periods (frames) constituting a radio frame may be referred to as a "subframe." Furthermore, a subframe may be comprised of one or more slots in the time domain. A subframe may be a fixed time duration (for example, 1 ms) not dependent on the numerology.

Furthermore, a slot may be comprised of one or more symbols in the time domain (OFDM (Orthogonal Frequency Division Multiplexing) symbols, SC-FDMA (Single Carrier Frequency Division Multiple Access) symbols, and so on). Also, a slot may be a time unit based on numerology. Also, a slot may include a plurality of mini-slots. Each mini-slot may consist of one or more symbols in the time domain. Also, a mini-slot may be referred to as a "subslot."

A radio frame, a subframe, a slot, a mini-slot and a symbol all represent the time unit in signal communication. A radio frame, a subframe, a slot, a mini-slot and a symbol may be each called by other applicable names. For example, 1 subframe may be referred to as a "transmission time interval (TTI)," or a plurality of consecutive subframes may be referred to as a "TTI," or 1 slot or mini-slot may be referred to as a "TTI." That is, a subframe and/or a TTI may be a subframe (1 ms) in existing LTE, may be a shorter period than 1 ms (for example, 1 to 13 symbols), or may be a longer period of time than 1 ms. Note that the unit to represent the TTI may be referred to as a "slot," a "mini slot" and so on, instead of a "subframe."

Here, a TTI refers to the minimum time unit of scheduling in radio communication, for example. For example, in LTE systems, a radio base station schedules the radio resources (such as the frequency bandwidth and transmission power that can be used in each user terminal) to allocate to each user terminal in TTI units. Note that the definition of TTIs is not limited to this.

The TTI may be the transmission time unit of channel-encoded data packets (transport blocks), code blocks and/or codewords, or may be the unit of processing in scheduling, link adaptation and so on. Note that when a TTI is given, the time interval (for example, the number of symbols) in which transport blocks, code blocks and/or codewords are actually mapped may be shorter than the TTI.

Note that, when 1 slot or 1 mini-slot is referred to as a "TTI," one or more TTIs (that is, one or more slots or one or more mini-slots) may be the minimum time unit of scheduling. Also, the number of slots (the number of mini-slots) to constitute this minimum time unit of scheduling may be controlled.

A TTI having a time duration of 1 ms may be referred to as a "normal TTI" (TTI in LTE Rel. 8 to 12), a "long TTI," a "normal subframe," a "long subframe," and so on. A TTI that is shorter than a normal TTI may be referred to as a "shortened TTI," a "short TTI," "a partial TTI" (or a "fractional TTI"), a "shortened subframe," a "short subframe," a "mini-slot," "a sub-slot" and so on.

Note that a long TTI (for example, a normal TTI, a subframe, etc.) may be replaced with a TTI having a time duration exceeding 1 ms, and a short TTI (for example, a shortened TTI) may be replaced with a TTI having a TTI length less than the TTI length of a long TTI and not less than 1 ms.

A resource block (RB) is the unit of resource allocation in the time domain and the frequency domain, and may include one or a plurality of consecutive subcarriers in the frequency domain. Also, an RB may include one or more symbols in the time domain, and may be 1 slot, 1 mini-slot, 1 subframe or 1 TTI in length. 1 TTI and 1 subframe each may be comprised of one or more resource blocks. Note that one or more RBs may be referred to as a "physical resource block (PRB (Physical RB))," a "subcarrier group (SCG)," a "resource element group (REG)," a "PRB pair," an "RB pair" and so on.

Furthermore, a resource block may be comprised of one or more resource elements (REs). For example, 1 RE may be a radio resource field of 1 subcarrier and 1 symbol.

Note that the structures of radio frames, subframes, slots, mini-slots, symbols and so on described above are merely examples. For example, configurations pertaining to the number of subframes included in a radio frame, the number of slots included in a subframe, the number of mini-slots included in a slot, the number of symbols and RBs included in a slot or a mini-slot, the number of subcarriers included in an RB, the number of symbols in a TTI, the symbol duration, the length of cyclic prefixes (CPs) and so on can be variously changed.

Also, the information and parameters described in this specification may be represented in absolute values or in relative values with respect to certain values, or may be represented in other information formats. For example, radio resources may be specified by certain indices. In addition, equations to use these parameters and so on may be used, apart from those explicitly disclosed in this specification.

The names used for parameters and so on in this specification are in no respect limiting. For example, since various channels (PUCCH (Physical Uplink Control Channel), PDCCH (Physical Downlink Control Channel) and so on) and information elements can be identified by any suitable names, the various names assigned to these individual channels and information elements are in no respect limiting.

The information, signals and/or others described in this specification may be represented by using a variety of different technologies. For example, data, instructions, commands, information, signals, bits, symbols and chips, all of which may be referenced throughout the herein-contained description, may be represented by voltages, currents, electromagnetic waves, magnetic fields or particles, optical fields or photons, or any combination of these.

Also, information, signals and so on can be output from higher layers to lower layers and/or from lower layers to higher layers. Information, signals and so on may be input and/or output via a plurality of network nodes.

The information, signals and so on that are input and/or output may be stored in a specific location (for example, a memory), or may be managed using a management table. The information, signals and so on to be input and/or output can be overwritten, updated or appended. The information, signals and so on that are output may be deleted. The information, signals and so on that are input may be transmitted to other pieces of apparatus.

Reporting of information is by no means limited to the examples/embodiments described in this specification, and other methods may be used as well. For example, reporting of information may be implemented by using physical layer signaling (for example, downlink control information (DCI), uplink control information (UCI), higher layer signaling (for example, RRC (Radio Resource Control) signaling, broadcast information (the master information block (MIB), system information blocks (SIBs) and so on), MAC (Medium Access Control) signaling and so on), and other signals and/or combinations of these.

Note that physical layer signaling may be referred to as "L1/L2 (Layer 1/Layer 2) control information (L1/L2 control signals)," "L1 control information (LI control signal)" and so on. Also, RRC signaling may be referred to as "RRC messages," and can be, for example, an RRC connection setup message, RRC connection reconfiguration message, and so on. Also, MAC signaling may be reported using, for example, MAC control elements (MAC CEs (Control Elements)).

Also, reporting of certain information (for example, reporting of information to the effect that "X holds") does not necessarily have to be sent explicitly, and can be sent implicitly (by, for example, not reporting this piece of information).

Decisions may be made in values represented by 1 bit (0 or 1), may be made in Boolean values that represent true or false, or may be made by comparing numerical values (for example, comparison against a certain value).

Software, whether referred to as "software," "firmware," "middleware," "microcode" or "hardware description language," or called by other names, should be interpreted broadly, to mean instructions, instruction sets, code, code segments, program codes, programs, subprograms, software modules, applications, software applications, software packages, routines, subroutines, objects, executable files, execution threads, procedures, functions and so on.

Also, software, commands, information and so on may be transmitted and received via communication media. For example, when software is transmitted from a website, a server or other remote sources by using wired technologies (coaxial cables, optical fiber cables, twisted-pair cables, digital subscriber lines (DSL) and so on) and/or wireless technologies (infrared radiation, microwaves and so on), these wired technologies and/or wireless technologies are also included in the definition of communication media.

The terms "system" and "network" as used herein are used interchangeably.

As used herein, the terms "base station (BS)," "radio base station," "eNB," "gNB," "cell," "sector," "cell group," "carrier," and "component carrier" may be used interchangeably. A base station may be referred to as a "fixed station," "NodeB," "eNodeB (eNB)," "access point," "transmission point," "receiving point," "femto cell," "small cell" and so on.

A base station can accommodate one or more (for example, 3) cells (also referred to as "sectors"). When a base station accommodates a plurality of cells, the entire coverage area of the base station can be partitioned into multiple smaller areas, and each smaller area can provide communication services through base station subsystems (for example, indoor small base stations (RRHs (Remote Radio Heads))). The term "cell" or "sector" refers to part or all of the coverage area of a base station and/or a base station subsystem that provides communication services within this coverage.

As used herein, the terms "mobile station (MS)" "user terminal," "user equipment (UE)" and "terminal" may be used interchangeably. A base station may be referred to as a "fixed station," "NodeB," "eNodeB (eNB)," "access point," "transmission point," "receiving point," "femto cell," "small cell" and so on.

A mobile station may be referred to, by a person skilled in the art, as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client" or some other suitable terms.

Furthermore, the radio base stations in this specification may be interpreted as user terminals. For example, each aspect/embodiment of the present invention may be applied to a configuration in which communication between a radio base station and a user terminal is replaced with communication among a plurality of user terminals (D2D (Device-to-Device)). In this case, user terminals 20 may have the functions of the radio base stations 10 described above. In addition, terms such as "uplink" and "downlink" may be interpreted as "side." For example, an uplink channel may be interpreted as a side channel.

Likewise, the user terminals in this specification may be interpreted as radio base stations. In this case, the radio base stations 10 may have the functions of the user terminals 20 described above.

Certain actions which have been described in this specification to be performed by base stations may, in some cases, be performed by higher nodes (upper nodes). In a network comprised of one or more network nodes with base stations, it is clear that various operations that are performed to communicate with terminals can be performed by base stations, one or more network nodes (for example, MMEs (Mobility Management Entities), S-GW (Serving-Gateways), and so on may be possible, but these are not limiting) other than base stations, or combinations of these.

The examples/embodiments illustrated in this specification may be used individually or in combinations, which may be switched depending on the mode of implementation. The order of processes, sequences, flowcharts and so on that have been used to describe the examples/embodiments herein may be re-ordered as long as inconsistencies do not arise. For example, although various methods have been illustrated in this specification with various components of steps in exemplary orders, the specific orders that are illustrated herein are by no means limiting.

The aspects/embodiments illustrated in this specification may be applied to systems that use LTE (Long Term Evolution), LTE-A (LTE-Advanced), LTE-B (LTE-Beyond), SUPER 3G, IMT-Advanced, 4G (4th generation mobile communication system), 5G (5th generation mobile communication system), FRA (Future Radio Access), New-RAT (Radio Access Technology), NR (New Radio), NX (New radio access), FX (Future generation radio access), GSM (registered trademark) (Global System for Mobile communications), CDMA 2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark) and other adequate radio communication methods, and/or next-generation systems that are enhanced based on these.

The phrase "based on" as used in this specification does not mean "based only on," unless otherwise specified. In other words, the phrase "based on" means both "based only on" and "based at least on."

Reference to elements with designations such as "first," "second" and so on as used herein does not generally limit the number/quantity or order of these elements. These designations are used only for convenience, as a method for distinguishing between two or more elements. In this way, reference to the first and second elements does not imply that only 2 elements may be employed, or that the first element must precede the second element in some way.

The terms "judge" and "determine" as used herein may encompass a wide variety of actions. For example, to "judge" and "determine" as used herein may be interpreted to mean making judgements and determinations related to calculating, computing, processing, deriving, investigating, looking up (for example, searching a table, a database or some other data structure), ascertaining and so on. Furthermore, to "judge" and "determine" as used herein may be interpreted to mean making judgements and determinations related to receiving (for example, receiving information), transmitting (for example, transmitting information), inputting, outputting, accessing (for example, accessing data in a memory) and so on. In addition, to "judge" and "determine" as used herein may be interpreted to mean making judgements and determinations related to resolving, selecting, choosing, establishing, comparing and so on. In other words, to "judge" and "determine" as used herein may be interpreted to mean making judgements and determinations related to some action.

As used herein, the terms "connected" and "coupled," or any variation of these terms, mean all direct or indirect connections or coupling between two or more elements, and may include the presence of one or more intermediate elements between 2 elements that are "connected" or "coupled" to each other. The coupling or connection between the elements may be physical, logical or a combination of these. For example, "connection" may be interpreted as "access." As used herein, 2 elements may be considered "connected" or "coupled" to each other by using one or more electrical wires, cables and/or printed electrical connections, and, as a number of non-limiting and non-inclusive examples, by using electromagnetic energy, such as electromagnetic energy having wavelengths in the radio frequency, microwave and optical regions (both visible and invisible).

When terms such as "include," "comprise" and variations of these are used in this specification or in claims, these terms are intended to be inclusive, in a manner similar to the way the term "provide" is used. Furthermore, the term "or" as used in this specification or in claims is intended to be not an exclusive disjunction.

Now, although the present invention has been described in detail above, it should be obvious to a person skilled in the art that the present invention is by no means limited to the embodiments described herein. The present invention can be implemented with various corrections and in various modifications, without departing from the spirit and scope of the present invention defined by the recitations of claims. Consequently, the description herein is provided only for the purpose of explaining examples, and should by no means be construed to limit the present invention in any way.

## Claims

1. A user terminal comprising:
a transmitting/receiving section that transmits and/or receives a signal by using a certain beam; and
a control section that exerts control for switching between a first beam selection process for selecting the certain beam by using information about a reported beam and a second beam selection process for selecting the certain beam autonomously, based on information about a certain switching condition.

2. The user terminal according to claim 1, wherein the control section switches the control by using a threshold for a certain measurement as the information about the certain switching condition.

3. The user terminal according to claim 1 or claim 2, wherein the control section switches the control by using information about a radio link failure (RLF) as the information about the certain switching condition.

4. The user terminal according to one of claim 1 to claim 3, wherein the control section switches the control by using information about the number of times the certain signal is transmitted, as the information about the certain switching condition.

5. A radio communication method for a user terminal, comprising the steps of:
transmitting and/or receiving a signal by using a certain beam; and
exerting control for switching between a first beam selection process for selecting the certain beam by using information about a reported beam and a second beam selection process for selecting the certain beam autonomously, based on information about a certain switching condition.
